# EUROPÄISCHE PATENTSCHRIFT

(11) **EP 0 385 130 B1**
(45) Veröffentlichungstag und Bekanntmachung des Hinweises auf die Patenterteilung: **22.12.1993**
(21) Anmeldenummer: 90102169.1
(22) Anmeldetag: 03.02.1990
(51) Int. Cl.: B01D 3/06, B01D 1/30, B01J 3/02, B01J 3/04

(54) **Verfahren und Vorrichtung zum Trennen eines aus einem Extraktor kommenden Stoffgemisches**
Process and apparatus for the separation of a mixture of substances coming from an extractor
Procédé et dispositif de séparation d'un mélange de substance venant d'un dispositif d'extraction

(30) Priorität: 28.02.1989 DE 3906169
(43) Veröffentlichungstag der Anmeldung: 05.09.1990
(73) Patentinhaber: Uhde GmbH, 44141 Dortmund (DE); MESSER GRIESHEIM GMBH, D-60314 Frankfurt (DE)
(72) Erfinder: Bork, Michael, D-4600 Dortmund 50 (DE); Saamer, Peter, D-5860 Iserlohn-Hennen (DE); Dierkes, Heribert, D-5800 Hagen 1 (DE); Körner, Peter, D-5800 Hagen 1 (DE); Lürken, Franz, D-4150 Krefeld (DE); Lenhard-Lubeseder, Ulrich, D-4150 Krefeld (DE); Beutler, Hans-Josef, D-4150 Krefeld 29 (DE)
(74) Vertreter: Patentanwälte Meinke, Dabringhaus und Partner

(56) Entgegenhaltungen:
- EP-A- 0 265 300
- DE-B- 1 035 105
- FR-A- 1 575 202
- LU-A- 82 835
- US-A- 2 166 999
- US-A- 4 115 072
- US-A- 4 294 652
- Stahl, E., Quirin, K.W., Gerard, D., Verdichtete Gase zur Extraktion und Raffination, Springer, 1987, Deutschland, Seiten 46 bis 62

## Beschreibung

Die Erfindung richtet sich auf ein Verfahren zum Trennen eines aus einem Extraktor kommenden Stoffgemisches aus Lösungsmitteln und Inhaltsstoffen, wobei das Stoffgemisch vom Extraktionsdruck auf einen niedrigen Druck entspannt wird.

Es sind eine Reihe von unterschiedlichen Verfahren bekannt, Inhaltsstoffe mittels Lösungsmitteln zu extrahieren. So lehrt die DE-A-21 27 611 Gewürzextrakte dadurch herzustellen, daß man beispielsweise ätherische Öle mittels überkritischen CO₂ extrahiert. Als Extraktionsstoffe sind Gase wie N₂O, SF₆, CF₃Cl, CAF₂Cl, Äthan, Äthylen bekannt, um nur einige Beispiele zu nennen. In der DE-A-28 27 002 wird Hopfen mittels CO₂ extrahiert, die DE-A-33 39 181 der Anmelderin zeigt die Entkoffeinierung von Teeblättern ebenfalls mittels CO₂. Die Regeneration von koffeinbeladener Aktivkohle mit heißem Wasser ist in der DE-A-32 13 592 beschrieben.

Ist im Gesamtverfahren zur Gewinnung von Inhaltsstoffen die Extraktion nur ein Schritt, so muß nachfolgend das Stoffgemisch aus Extraktionsmittel einerseits und Inhaltsstoffen andererseits wieder getrennt werden, um die Inhaltsstoffe zu gewinnen. Es ist dabei bekannt, das auf hohem Druck befindliche Lösungsmittel einschließlich der Inhaltsstoffe in einem Entspannungsventil zu entspannen und anschließend das Lösungsmittel in einer weiteren Stufe zu verdampfen, wobei das Extrakt in einem Abscheidebehälter gesammelt wird. Alle Stufen sind dabei mittels Rohrleitungen verbunden.

Ein besonderes Problem bei derartigen Verfahren besteht dann, wenn beispielsweise die Inhaltsstoffe hoch viskos sind. Fallen die Stoffe frühzeitig aus, wenn das Gemisch in den Armaturen oder Rohrleitungen unter den Trenndruck gerät, so kann es zu Verstopfungen und Verklebungen der Rohrleitungen, der Ventile und der sonstigen Armaturen kommen.

Hier setzt die Erfindung an, deren Aufgabe es ist, insbesondere aber nicht ausschließlich bei hochviskosen Inhaltsstoffen diese einfach und schnell und ohne großen Aufwand abzuscheiden.

Verfahrensgemäß geschieht dies dadurch, daß das Stoffgemisch über ein Entspannungsventil unmittelbar in einen großvolumigen Raum eingesprüht wird.

Durch die Erfindung wird die Entspannung, die Verdampfung und die Abscheidung in einem einzigen Behälter vorgenommen, so daß schlechterdings Verstopfungen nicht vorkommen können, da die Inhaltsstoffe sofort in dem großvolumigen Raum sammelbar sind.

In Ausgestaltung ist vorgesehen, daß das Stoffgemisch in einen aufgeheizten, großvolumigen Raum entspannt wird. Dies ist dann besonders sinnvoll, wenn durch Wärmeerhöhung die Zähflüssigkeit und Viskosität der entsprechenden Inhaltsstoffe verringert werden kann, dies vereinfacht das Abscheiden dieser Stoffe in besonderem Maße.

Dem gleichen Ziel dient eine Variante der Erfindung, die darin besteht, daß das Stoffgemisch im Bereich des Entspannungsventiles direkt mit verdampfendem Lösungsmittel gemischt wird und/oder das Stoffgemisch in einen mit Lösungsmitteldampf gefüllten, ggf. gesättigten großvolumigen Raum entspannt wird.

Die Erfindung sieht auch eine Vorrichtung zur Durchführung des Verfahrens in Verbindung mit der Lösung der oben formulierten Aufgabe vor, wobei die Vorrichtung mit einem Druckgefäß mit Zuführeinrichtungen für das Stoffgemisch und Abführleitungen für das abgetrennte Lösungsmittel ausgerüstet ist.

Nach der Erfindung zeichnet sich die Vorrichtung dadurch aus, daß in einer Druckbehälterwand, insbesondere im Druckbehälterdeckel, ein Entspannungsventil zum direkten Zuführen des Stoffgemisches in den großvolumigen Raum des Druckgefäßes vorgesehen ist.

Ist aus bautechnischen Gründen der Druckbehälterdeckel selbst nur mit einer Zuführöffnung versehen, so sieht in Ausgestaltung die Erfindung vor, daß dieser Zuführöffnung unmittelbar ein Ventilsitz zugeordnet ist.

Um ein leichteres Entsorgen möglich zu machen, sieht die Erfindung auch vor, daß im Druckbehälter ein Auffanggefäß für die Inhaltsstoffe vorgesehen ist.

Sehr vorteilhaft ist es, wenn eine Heizeinrichtung unmittelbar am Druckgefäß vorhanden ist, um eine direkte Beheizung auch des Auffanggefäßes zu ermöglichen. Dazu sieht die Erfindung vor, daß zwischen Auffanggefäßaußenwand und Druckbehälterinnenwand eine Heizeinrichtung vorgesehen ist, etwa eine Heizspirale oder dgl.

Um das gewonnene Extrakt aus dem Druckbehälter in einfacher Weise entnehmen zu können, ist darüber hinaus vorgesehen, daß das Auffanggefäß über einen mit Schnellverschluß versehenen Boden aus dem Druckgefäß entnehmbar bzw. in dieses einsetzbar ist.

Die Erfindung ist nachstehend anhand der Zeichnung beispielsweise näher erläutert. Diese zeigt in
- Fig. 1: in vereinfachter Darstellung den Querschnitt durch ein Druckgefäß sowie in
- Fig. 2: eine Detailzeichnung eines Ventilsitzes in einem Bereich eines Druckbehälterdeckels.

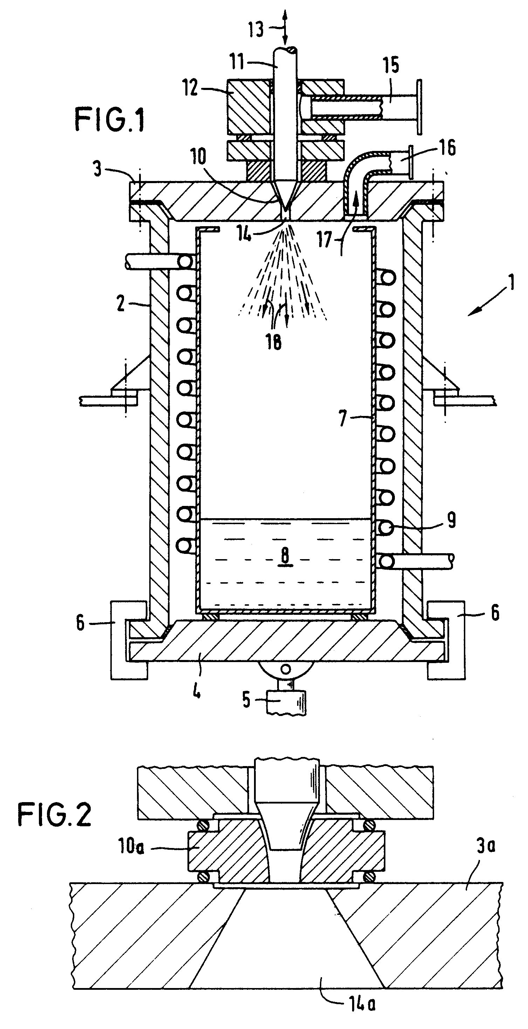

Die allgemein mit 1 bezeichnete Vorrichtung, so wie sie in Fig. 1 dargestellt ist, besteht aus einem im wesentlichen zylindrischen Druckgefäß 2 mit einem Deckel 3 und einem Boden 4, wobei der Boden 4 über eine angedeutete Hydraulik 5 nach Lösen von Schnellverschlüssen 6 absenkbar ist.

Im Inneren des Druckbehälters 2 befindet sich ein Auffanggefäß 7 für die extrahierten Inhaltsstoffe 8, wobei das Auffanggefäß 7 von einer Heizspirale 9 umgeben ist.

Der Deckel 3 ist etwa zentrisch mit einem Kegelsitz 10 für eine Ventilstange 11 ausgerüstet, die in einem Ventilgehäuse 12 in Richtung des Doppelpfeiles 13 bewegbar ist, um eine mit 14 bezeichnete Sprühöffnung zu öffnen oder zu schließen.

Über eine Leitung 15 wird das vom Extraktor kommende Stoffgemisch dem Behälter 2 über das Ventilgehäuse 12 und den Ventilsitz im Deckel 3 zugeleitet. Das Extraktionsmittel, z.B. das CO₂ verläßt über die Leitung 16 die Vorrichtung 1, was mit dem Pfeil 17 angedeutet ist.

Nach Einsprühen des Stoffgemisches, was durch die Pfeile 18 angedeutet ist, in einen beheizten Innenraum im Druckbehälter 1 wird nach Unterschreiten des Lösungsdruckes das Extraktionsmittel vom zu extrahierenden Stoff getrennt, der sich im Behälter 7 sammelt, die Viskosität ist über die Heizung 9 beeinflußbar.

Um das Extrakt zu entnehmen, werden die Schnellverschlüsse am Boden 4 des Behälters 1 gelöst und der Boden einschließlich des Behälters 7 abgesenkt und ggf. gegen einen leeren Behälter ausgetauscht, wieder eingeführt und über die Schnellverschlüsse 6 verspannt.

Ist die direkte Ausbildung eines Ventiles im Deckel 3 nicht möglich, so zeigt die Fig. 2 eine Alternative. Hier ist das Ventil mit einem Ventilsitz 10a oben auf dem Deckel 3a aufgebaut, die Einsprühöffnung 14a ist hier als sich erweiternder Trichter gestaltet.

Natürlich sind die beschriebenen Ausführungsbeispiele der Erfindung noch in vielfacher Hinsicht abzuändern, ohne den Grundgedanken zu verlassen. So kann beispielsweise eine Reihe von Ventilsitzen im Deckel vorgesehen sein, wenn größere Mengen eingesprüht werden sollen, zusätzlich können Beaufschlagungsleitungen für Heißluft, Heißdampf, heißes Lösungsmittel oder dgl. vorgesehen sein, was nicht näher dargestellt ist. Neben der reinen Heizung über Heizschlangen kann eine induktive Heizung vorgesehen sein und dgl. mehr.

## Patentansprüche

1. Verfahren zum Trennen eines aus einem Extraktor kommenden Stoffgemisches aus Lösungsmitteln und Inhaltsstoffen, wobei das Stoffgemisch vom Extraktionsdruck auf einen niedrigen Druck entspannt und in einen großvolumigen Raum (7) geleitet wird,
dadurch gekennzeichnet,
daß zur Trennung hochviskoser Inhaltsstoffe vom Lösungsmittel das Stoffgemisch (18) über ein Entspannungsventil (10,14) unmittelbar in den großvolumigen Raum (7) eingesprüht wird.

2. Verfahren nach Anspruch 1,
dadurch gekennzeichnet,
daß das Stoffgemisch in einem aufgeheizten, großvolumigen Raum (7) entspannt wird.

3. Verfahren nach Anspruch 1 oder 2,
dadurch gekennzeichnet,
daß das Stoffgemisch im Bereich des Entspannungsventiles (10,14) direkt mit verdampfendem Lösungsmittel gemischt wird.

4. Verfahren nach einem der vorangehenden Ansprüche,
dadurch gekennzeichnet,
daß das Stoffgemisch in einem mit Lösungsmitteldampf gefüllten, großvolumigen Raum (7) entspannt wird.

5. Vorrichtung zur Durchführung des Verfahrens nach einem der vorangehenden Ansprüche mit einem Druckgefäßgehäuse mit Zuführeinrichtungen (15) für das Stoffgemisch und Abführleitungen (16) für das abgetrennte Lösungsmittel,
dadurch gekennzeichnet,
daß in einer Druckbehälterwand, insbesondere im Druckbehälterdeckel (3), ein Entspannungsventil (10,14) zum direkten Zuführen des Stoffgemisches in das großvolumige Druckgefäß (1) vorgesehen ist.

6. Vorrichtung nach Anspruch 5,
dadurch gekennzeichnet,
daß der Zuführöffnung (14a) für das Stoffgemisch unter Druck am Behälter unmittelbar ein Ventilsitz (10a) zugeordnet ist.

7. Vorrichtung nach Anspruch 5 oder 6,
dadurch gekennzeichnet,
daß im Druckbehälter (1) ein Auffanggefäß (7) für die Inhaltsstoffe (8) vorgesehen ist.

8. Vorrichtung nach einem der Ansprüche 5 bis 7,
dadurch gekennzeichnet,
daß zwischen Auffanggefäßaußenwand und Druckbehälterinnenwand eine Heizeinrichtung (9) vorgesehen ist.

9. Vorrichtung nach einem der Ansprüche 5 bis 8,
dadurch gekennzeichnet,
daß das Auffanggefäß (7) über einen mit Schnellverschluß (6) versehenen Boden (4) aus dem Druckgefäß (1) entnehmbar bzw. in dieses einsetzbar ist.

## Claims

1. A method of separating a mixture coming from an extractor and comprising solvents and substances contained therein, wherein the mixture is relieved from the extraction pressure to a low pressure and passed into a large-volume space (7) characterised in that for the separation of high-viscosity substances contained in the mixture from the solvent the mixture (18) is sprayed by way of a pressure-relief valve (10, 14) directly into the large-volume space (7).

2. A method according to claim 1 characterised in that the mixture is relieved of pressure in a heated large-volume space (7).

3. A method according to claim 1 or claim 2 characterised in that the mixture is mixed directly with evaporating solvent in the region of the pressure-relief valve (10, 14).

4. A method according to one of the preceding claims characterised in that the mixture is relieved of pressure in a large-volume space (7) which is filled with solvent vapour.

5. Apparatus for carrying out the method according to one of the preceding claims comprising a pressure vessel housing with feed means (15) for the mixture and discharge conduits (16) for the solvent which is separated off, characterised in that provided in a pressure container wall, in particular in the pressure container cover (3) is a pressure-relief valve (10, 14) for directly feeding the mixture into the large-volume pressure vessel (1).

6. Apparatus according to claim 5 characterised in that a valve seat (10a) is associated directly on the container with the feed opening (14a) for the mixture under pressure.

7. Apparatus according to clam 5 or claim 6 characterised in that a catch vessel (7) for the substances (8) contained in the mixture is provided in the pressure container (1).

8. Apparatus according to one of claims 5 to 7 characterised in that a heating means (9) is provided between the outside wall of the catch vessel and the inside wall of the pressure container.

9. Apparatus according to one of claims 5 to 8 characterised in that the catch vessel (7) can be removed from and fitted into the pressure vessel (1) by way of a bottom (4) provided with a quick-action closure (6).

## Revendications

1. Procédé pour la séparation d'un mélange de substances provenant d'un extracteur à partir de solvants et de substances constitutives, le mélange de substances étant détendu pour être amené de la pression d'extraction à une pression plus basse, caractérisé en ce que pour la séparation de substances fortement visqueuses du solvant, le mélange de substances (18) est introduit par pulvérisation par une soupape de détente (10, 14) directement dans une chambre de grand volume (7).

2. Procédé selon la revendication 1, caractérise en ce que le mélange de substances est détendu dans une chambre chauffée (7) de grand volume.

3. Procédé selon la revendication 1 ou 2, caractérisé en ce que le mélange de substances est mélangé au niveau de la soupape de détente (10, 14) directement avec le solvant en évaporation.

4. Procédé selon l'une des revendications précédentes, caractérisé en ce que le mélange de substances est détendu dans une chambre de grand volume (7) remplie de vapeur de solvant.

5. Dispositif pour la réalisation du procédé selon l'une des revendications précédentes avec un logement de réservoir sous pression muni de systèmes d'amenée (15) pour le mélange de substances et de conduites d'évacuation (16) pour le solvant séparé, caractérisé en ce que dans une paroi du réservoir sous pression, notamment dans le couvercle du réservoir sous pression (3), il est prévu une soupape de détente (10, 14) pour l'amenée directe du mélange de substances dans le réservoir sous pression de grand volume (1).

6. Dispositif selon la revendication 5, caractérisé en ce qu'un siège de soupape (10a) est affecté directement à l'ouverture d'amenée (14a) pour le mélange de substances sous pression sur le réservoir.

7. Dispositif selon la revendication 5 ou 6, caractérisé en ce que dans le réservoir sous pression (1) est prévu un récipient de recueil (7) pour les substances constitutives (8).

8. Dispositif selon l'une des revendications 5 à 7, caractérisé en ce qu'entre la paroi extérieure du récipient de recueil et la paroi interne du réservoir sous pression est prévu un système de chauffage (9).

9. Dispositif selon l'une des revendications 5 à 8, caractérisé en ce que le récipient de recueil (7) peut être monté et démonté par l'intermédiaire d'un fond (4) muni d'un système de fermeture rapide (6) dans le réservoir sous pression (1).
